Europäisches Patentamt

European Patent Office

Office européen des brevets

(11) Veröffentlichungsnummer: **0 512 312 B1**

# EUROPÄISCHE PATENTSCHRIFT

(45) Veröffentlichungstag der Patentschrift: **08.11.95**

(51) Int. Cl.6: **G01B 11/30**

(21) Anmeldenummer: **92106786.4**

(22) Anmeldetag: **21.04.92**

(54) **Verfahren und Messanordnung zur berührungslosen on-line Messung der Oberflächenrauheit.**

(30) Priorität: **06.05.91 DE 4114671**

(43) Veröffentlichungstag der Anmeldung:
**11.11.92 Patentblatt 92/46**

(45) Bekanntmachung des Hinweises auf die
Patenterteilung:
**08.11.95 Patentblatt 95/45**

(84) Benannte Vertragsstaaten:
**BE DE ES FR GB IT NL SE**

(56) Entgegenhaltungen:

**PATENT ABSTRACTS OF JAPAN vol. 12, no.
51 (P-667) 16. Februar 1988 ; & JP-A-62 198
707**

(73) Patentinhaber: **HOECHST AKTIENGESELL-
SCHAFT**

**D-65926 Frankfurt am Main (DE)**

(72) Erfinder: **Schmidt, Hugo, Dr. Dipl.-Phys.
Birkenweg 6
W-6300 Giessen-Lützellinden (DE)**
Erfinder: **Ruckszio, Manfred
Alfred-Delp-Strasse 17
W-6204 Taunusstein (DE)**
Erfinder: **Haas, Raimund, Dr. Dipl.-Ing.
Johannesallee 20
W-6230 Frankfurt/M. 80 (DE)**
Erfinder: **Mackert, Walter, Dipl.-Phys.
Kurt-Tucholsky-Strasse 9
W-6200 Wiesbaden (DE)**

## Beschreibung

Die Erfindung betrifft ein Verfahren zur berührungslosen on-line Messung der Oberflächenrauheit eines platten- oder bandförmigen Materials aus Metall oder einer Metallegierung sowie eine Meßanordnung.

Ein wesentliches Qualitätsmerkmal von Metalloberflächen sind Texturparameter. Am bekanntesten ist die Darstellung der Oberflächenrauheit, wobei die umfangreichen Daten eines gemessenen Rauheits-Profilschnittes in der Praxis meist auf wenige charakteristische Kenngrößen, wie z.B. die Rauhtiefe Ra und die mittlere Rauhtiefe Rz reduziert werden.

Bei der Rauheitsmessung ist es im allgemeinen nicht notwendig, die gesamte Oberfläche lückenlos abzutasten und zu vermessen. Es genügt, wenn eine hinreichend große Anzahl von Messungen eine ausreichende statistische Aussage ermöglichen. Die Erfassung der Rauheit mittels einer on-line Messung bei schnell bewegtem Material ist mit erheblichen Schwierigkeiten verbunden. Das klassische Tastschnittverfahren ist bei Geschwindigkeiten größer als 20 m/min keinesfalls in der Lage, zufriedenstellende Ergebnisse zu liefern. Daher werden solche on-line Messungen seit langem auf optischer Basis durchgeführt.

So ist in der Firmendruckschrift der Firma Sick GmbH Optik-Elektronik, München "SORM Sick optisches Rauheitsmeßsystem" ein Rauheitsmeßgerät beschrieben, das im Bereich der metallverarbeitenden Industrie als on-line Meßgerät zur kontinuierlichen Prozeßüberwachung eingesetzt wird. Das Meßgerät erzeugt mit Hilfe eines Halbleiterlasers einen feinen Lasermeßstrahl auf der Materialoberfläche. Der Lichtfleckdurchmesser beträgt ca. 10 $\mu$m. Durch die Oberflächenstruktur wird das auftreffende Licht abhängig vom Flankenwinkel der Oberflächenfacette in eine bestimmte Raumrichtung reflektiert. Die Hauptrichtung der Reflexion wird von einem Laserdiodenempfängerarray erfaßt und in ein winkelabhängiges analoges Signal umgewandelt. Dieses Analogsignal wird digitalisiert, und das Oberflächenhöhenprofil aufgrund der Flankenwinkeldaten und der Vorschubinformationen zurückgerechnet. Als Rohdaten wird somit ein Profilverlauf erhalten, der in etwa mit dem einer mechanischen Messung vergleichbar ist. Anschließend werden diese Rohdaten in üblicher Weise ausgewertet und die genormten Rauheitskenngrößen, wie Ra, Rz, ermittelt und ausgegeben. Bei dieser Messung fällt die von der Oberfläche rückgestreute Intensitätsverteilung in Form einer Streukeule über eine Anzahl Linsen auf die zugeordneten, ringförmig um den Laserlichtfleck angeordneten Fotoempfänger. Dieses Fotoempfängerarray ist in Form eines PSD-Sensors (position sensitive detector) verschaltet. An jedem Meßpunkt wird direkt die Richtung des Schwerpunktes der Streukeule gemessen. Damit wird an jedem Oberflächenmeßpunkt optisch die Flankensteilheit der jeweiligen Oberflächenfacette bestimmt. Bei Bewegung der zu messenden Oberfläche unter dem Meßkopf wird durch Rückintegration das Oberflächenprofil errechnet. Der Rauheitsmeßbereich beträgt für Ra 0,05 bis 2,5 $\mu$m, und die Materialgeschwindigkeit liegt im Bereich von 0,3 bis 30 m/sec. Dieses Meßgerät ist sehr aufwendig, da der optische Meßkopf neben einem Halbleiterlaser das Empfängerarray, eine Autofokuseinrichtung zur Nachführung des optischen Meßkopfes und eine Signalvorverarbeitung enthält. Desweiteren ist ein Auswertrechner mit zwei floppy disk Laufwerken, einer Schnittstelle für mehrere optische Meßköpfe und eine Zentraleinheit erforderlich.

In der Firmendruckschrift "Profilmeßplatz RM 600 2-D" der Firma Rodenstock, München, ist ein Oberflächenmeßsystem RM 600 beschrieben, mit dem schnell und berührungslos Oberflächenstrukturen zwischen 0,02 $\mu$m und 600 $\mu$m erfaßt werden können. Das Meßsystem umfaßt im wesentlichen drei Komponenten, nämlich einen optischen Abstandssensor, eine lineare oder X/Y Vorschubeinheit und einen Steuerrechner mit Farbbildschirm, Drucker und Software-Paket. Kern des Systems ist ein optischer Sensor, der mit einem Laserfokus von 1 oder 2 $\mu$m Durchmesser Abstandsänderungen zwischen minimal 0,002 $\mu$m und maximal 600 $\mu$m registriert. Bei der Messung wird das Meßobjekt gleichmäßig am Sensor vorbeibewegt. Die hierbei anfallenden Meßwerte bilden ein Höhenprofil, das vom Steuerrechner als Grafik ausgegeben und vermessen werden kann. Durch geeignete Filterung sind Aussagen über einzelne Oberflächenparameter, wie Rauheit, Welligkeit etc. möglich.

Der optische Abstandssensor arbeitet mit einem Infrarot-Laser, dessen Strahl auf die Oberfläche des Meßobjekts fokussiert wird. Auf der Meßoberfläche entsteht je nach Sensortyp ein Leuchtfleck von 1 oder 2 $\mu$m Durchmesser, der im Sensor auf einen Fokusdetektor abgebildet wird. Ändert sich der Abstand zur Meßfläche, so liefert der Detektor ein Regelsignal für die Fokusnachführautomatik. Ein Tauchspulensystem verschiebt dann das Objektiv, bis der Laserstrahl wieder exakt auf der Oberfläche des Meßobjektes fokussiert ist.

Da der Fokusabstand konstant ist, entsprechen die Bewegungen des Objektivs exakt dem Höhenverlauf der Meßfläche. Die jeweilige Position des Objektivs wird von einem induktiven Sensor erfaßt und liefert ein Meßsignal, das von den Reflexionseigenschaften der Meßoberfläche unabhängig ist.

Dieses Oberflächen-Meßsystem ist nicht für die Messung an schnellaufenden Materialien geeignet.

EP 0 512 312 B1

Die Oberflächenrauheit von Metallen oder Metallegierungen ist ein Qualitätsmerkmal, das zur Steuerung der Aufrauhung von solchen Materialien herangezogen werden kann. Die Oberflächenrauheit bestimmt u.a. das Reflexionsvermögen bzw. den Remissionswert der Oberfläche für einfallende Strahlung im Ultra- bzw. Infrarotbereich. So ist beispielsweise die Größe der Rauheit eines Bandes oder einer Platte aus Aluminium oder aus einer Aluminiumlegierung der bestimmende Parameter für die Reflexion von auf die Materialoberfläche einfallender Infrarotstrahlung. Mit der Zunahme der Rauheit solcher Materialien an der Oberfläche verliert die Oberfläche an Reflexionsvermögen, und die reflektierte Infrarot- bzw. Wärmestrahlung nimmt ab.

Aufgabe der Erfindung ist es, ein Verfahren zu entwickeln, das aufgrund des Reflexionsverhaltens der auf die Materialoberfläche eingestrahlten Strahlung eine Bestimmung der Oberflächenrauheit in einfacher Weise ermöglicht.

Diese Aufgabe wird erfindungsgemäß dadurch gelöst, daß ein umrissener Meßbereich der Materialoberfläche, der im Sichtfeld einer Meßeinrichtung eines Infrarot-Strahlers für von der Materialoberfläche reflektierte Strahlung liegt, mit schräg einfallender Infrarotstrahlung eines Infrarotstrahlers beaufschlagt wird, daß die Temperatur der von der Materialoberfläche reflektierten Infrarotstrahlung gemessen und mit einer Kalibrierkurve verglichen wird, die in der Weise aufgenommen wird, daß bei gleichbleibender Temperatur des Infrarotstrahlers die Temperatur der von der Materialoberfläche reflektierten Infrarotstrahlung für unterschiedliche bekannte Rauheitsgrade gemessen wird. Hierbei können die Rauheitsgrade nach bekannten optischen und mechanischen Methoden erfaßt werden.

Eine wesentlich bessere Information zur Oberflächenbeschaffenheit wird geliefert, wenn die Referenzwerte zur Rauheit aus der spektralen Zerlegung der reflektierten Infrarotstrahlung abgeleitet werden.

Im Reflexionsspektrum der Infrarotstrahlen sind solche Wellen stark reduziert, deren Wellenlängen unterhalb der Abmessungen der Oberflächenstrukturierung liegen. Längerwellige Infrarotstrahlen werden dagegen von der Oberfläche nach wie vor reflektiert.

Die spektrale Zerlegung liefert also die Information darüber, für welche Wellenlängen die Oberfläche gerade noch wie ein Spiegel wirkt. Diese Wellenlängen entsprechen dann dem Rauheitswert der Oberfläche.

Diesem Rauheitswert wird dann die mit einem Infrarotthermometer an dieser Oberfläche gemessene Reflexionstemperatur zugeordnet. Führt man diese Messungen für alle interessierenden Oberflächenrauheiten durch, kommt man zur gewünschten Kalibrierkurve, die dann wesentlich wirklichkeitsgetreuer als die mechanische Abtastung Rauheitswerte liefert.

In Ausgestaltung des Verfahrens wird das Material an der Meßstelle über den vorgegebenen Meßbereich auf konstanter Temperatur gehalten. Zweckmäßigerweise wird der Infrarotstrahler auf konstanter Temperatur gehalten, so daß die Temperatur im Meßbereich auf der Materialoberfläche 373 bis 393 K beträgt.

In Weiterführung des Verfahrens wird aus dem Vergleich der gemessenen Temperatur der reflektierten Strahlung anhand der Kalibrierkurve mit einem Sollwert der Temperatur ein Signal für die Steuerung einer Aufrauhstufe für die Materialoberfläche erhalten.

Die weitere Ausgestaltung des erfindungsgemäßen Verfahrens ergibt sich aus den Merkmalen der Ansprüche 5 und 6.

Die Meßanordnung zur berührungslosen on-line Messung der Oberflächenrauheit eines platten- oder bandförmigen Materials aus Metall oder einer Metallegierung zeichnet sich dadurch aus, daß die Meßanordnung aus einem Infrarotstrahler und einem Infrarotthermometer besteht, daß der Strahlengang des Infrarotstrahlers schräg auf die Materialoberfläche innerhalb eines umrissenen Meßbereiches gerichtet ist, daß der gesamte Meßbereich der Materialoberfläche, der im Sichtfeld des Infrarot-Thermometers für die reflektierte Strahlung liegt, mit Infrarotstrahlung beaufschlagt ist, daß eine Vergleichseinrichtung vorhanden ist, in der der Temperaturverlauf der von der Materialoberfläche reflektierten Strahlung in Abhängigkeit von der Oberflächenrauheit abgespeichert ist, und daß die Temperatur der reflektierten Infrarotstrahlung mit dem abgespeicherten Temperaturverlauf verglichen wird, um die der gemessenen Temperatur entsprechende Oberflächenrauheit zu bestimmen.

Zweckmäßigerweise ist das Material bzw. der Meßbereich während der Messung über eine beheizte Stahlwalze geführt und liegt die Meßanordnung der Stahlwalze gegenüber.

Ein Sollwert der Temperatur wird in die Vergleichseinrichtung eingespeist und mit den jeweiligen gemessenen Temperaturwerten verglichen, um daraus ein Differentialsignal als Steuersignal zu erhalten, das über einen Ausgang der Vergleichseinrichtung einer Aufrauheinrichtung für das Material zugeleitet wird.

Die Erfindung wird im folgenden anhand eines zeichnerisch dargestellten Ausführungsbeispiels näher erläutert. Es zeigen:

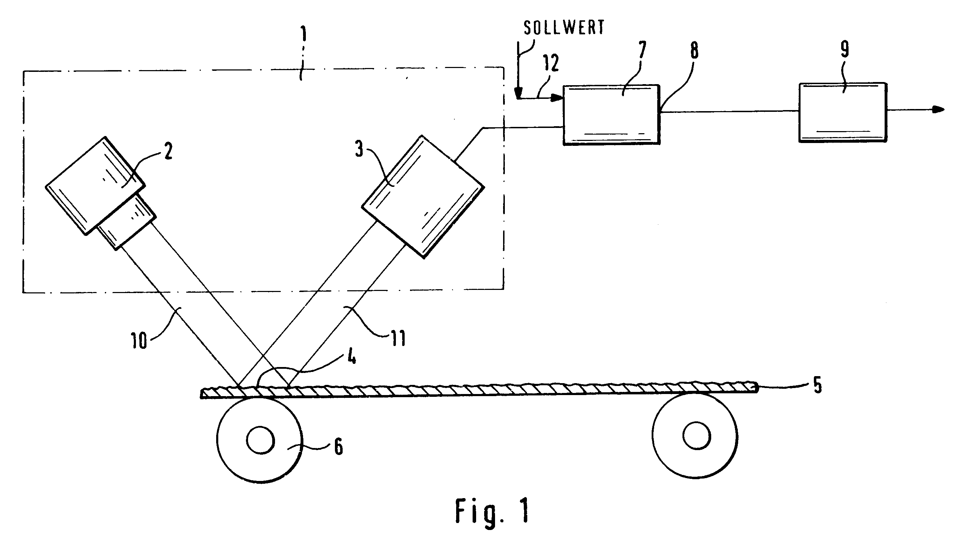

Fig. 1    schematisch eine Meßanordnung nach der Erfindung,

Fig. 2    in einem Diagramm den Zusammenhang zwischen der gemessenen Temperatur der von der

3

mechanisch aufgerauhten Oberfläche einer Aluminiumplatte reflektierten IR-Strahlung und der mittleren Rauhtiefe Rz, und

Fig. 3    in einem Diagramm, ähnlich der Fig. 2, den Temperaturverlauf der von einer mechanisch aufgerauhten Platte aus Aluminium reflektierten IR-Strahlung in Abhängigkeit von der Rauhtiefe Ra.

Eine Meßanordnung 1 zur berührungslosen on-line Messung der Oberflächenrauheit eines platten- oder bandförmigen Materials 5 besteht aus einem Infrarotstrahler 2 und einem Infrarot-Thermometer 3. Der Strahlengang 10 des Infrarotstrahlers 2 ist schräg auf die Materialoberfläche innerhalb eines umrissenen Meßbereichs 4 gerichtet. Dieser Meßbereich 4 befindet sich oberhalb einer Stahlwalze 6, über welche das Material 5 geführt ist. Die Oberfläche des Infrarotstrahlers wird auf einer Temperatur gleich oder größer 473 K gehalten. Die Temperatur im Meßbereich auf der Materialoberfläche selbst ist gleich oder größer als 373 K.

Das Infrarot-Thermometer 3 ist mit einer Vergleichseinrichtung 7 elektrisch verbunden, in welcher der Temperaturverlauf der von der Materialoberfläche reflektierten Strahlung in Abhängigkeit von der bekannten Oberflächenrauheit abgespeichert wird. Ein Ausgang 8 dieser Vergleichseinrichtung 7 ist mit einer Steuerung 9 einer Aufrauheinrichtung für das Material 5 verbunden. Bei dieser Aufrauheinrichtung, die nicht gezeigt ist, kann es sich beispielsweise um eine mechanische Aufrauhstufe handeln, in der ein Aluminiumband mittels Bürstenwalzen mechanisch aufgerauht wird. Durch die Regelung der Umlaufgeschwindigkeit der Bürsten mittels des Ausgangssignals der Vergleichseinrichtung 7 kann dann die mechanische Aufrauhung der Aluminiumoberfläche des Bandes weitgehend konstant gehalten werden.

Die in die Vergleichseinrichtung 7 eingespeisten gemessenen Temperaturwerte werden mit einem Sollwert der Temperatur verglichen, wobei im Falle von Übereinstimmung über den Ausgang 8 kein Ausgangssignal erhalten wird. Nur im Falle von Abweichungen zwischen dem Sollwert und dem momentanen Temperaturmeßwert wird ein Ausgangssignal von der Vergleichseinrichtung 7 erhalten, das dann zur Steuerung der Aufrauheinrichtung für das Material verwendet wird.

Wenn an der Materialoberfläche, beispielsweise einer Aluminium- oder sonstigen Metalloberfläche, sei es durch verschiedene Geschwindigkeiten oder durch Unterschiede im Material zu unterschiedlichen Aufrauhungen kommt, hat die Materialoberfläche einen veränderten Reflexionsgrad. Diese Veränderung wird durch das Infrarot-Thermometer als eine Temperaturänderung erfaßt und zur Steuerung der Aufrauheinrichtung benutzt. Die Voraussetzung für diese Meßmethode ist, daß vorab für ein bestimmtes Material, das unterschiedliche Oberflächenrauheiten aufweist, der Temperaturverlauf in Abhängigkeit von den Oberflächenrauheiten als Kalibrierkurve empirisch ermittelt wird. Dieser Temperaturverlauf ist gleichbedeutend mit dem Reflexions- oder Remissionsgrad der Materialoberfläche bei unterschiedlichen Rauheitskenngrößen der Oberfläche.

Die Oberflächentemperatur des Infrarotstrahlers 2 wird während der Messung konstant gehalten. Die auf die zu vermessende Oberfläche in dem Meßbereich 4 schräg einfallende Infrarotstrahlung bzw. Wärmestrahlung wird innerhalb eines Strahlenganges 11 reflektiert, wobei Sorge dafür getragen werden muß, daß der gesamte Meßbereich 4 der Oberfläche, der im Sichtfeld des Infrarot-Thermometers 3 liegt, auch warmebestrahlt wird.

Dem Meßverfahren liegt der Gedanke zugrunde, daß die reflektierte Wärmestrahlung des Infrarotstrahlers 2 von der Oberflächenrauheit der Materialoberfläche, auf die die Strahlung auftrifft, abhängt. So zeigt sich zum Beispiel, daß eine weniger stark aufgerauhte Metalloberfläche die Wärmestrahlung stärker als eine stärker aufgerauhte Metalloberfläche reflektiert.

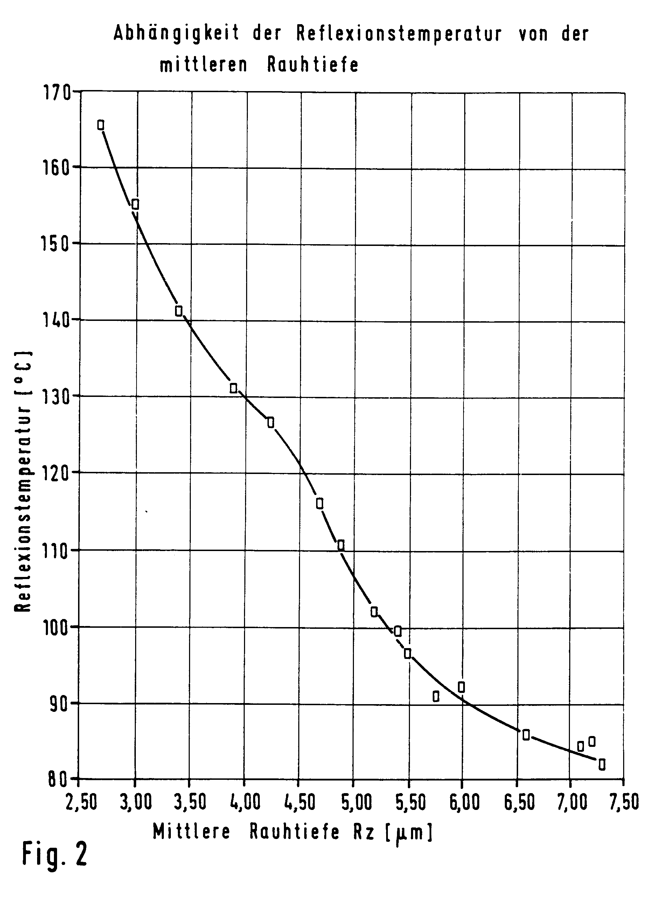

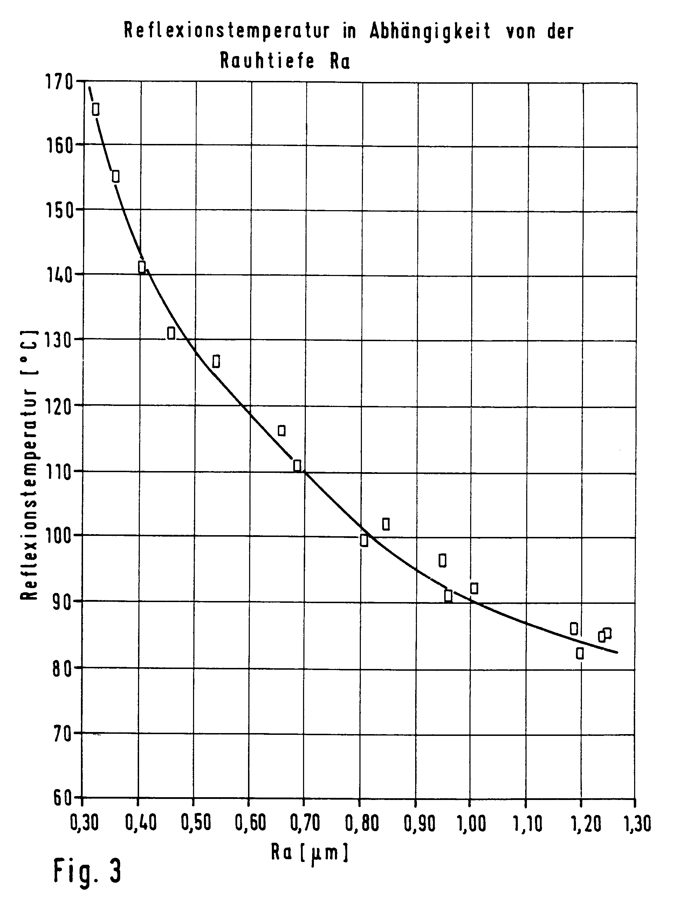

Die Figuren 2 und 3 zeigen in Diagrammen die Abhängigkeit der gemessenen Temperatur der reflektierten Infrarotstrahlung, kurz als Reflexionstemperatur in °C bezeichnet, von der mittleren Rauhtiefe Rz in $\mu$m einer Aluminiumplatte und von der Rauhtiefe Ra in $\mu$m einer derartigen Platte. Bei den Rauheitskenngrößen Rz und Ra handelt es sich um genormte Größen zur Festlegung der Rauheit einer Oberfläche. Dabei ist die mittlere Rauhtiefe Rz die durchschnittliche Höhendifferenz zwischen den fünf höchsten Spitzen pi und den fünf tiefsten Tälern vi eines Höhenprofils der zu vermessenden Oberfläche innerhalb einer Taststrecke L = 5 mm. sie wird gemäß der Gleichung (1)

$$Rz = \frac{1}{5}\left(\sum_{1=i}^{5} y_{pi} - \sum_{i=1}^{5} y_{vi}\right) \qquad (1)$$

in $\mu$m bestimmt.

Die Rauhtiefe Ra ist das arithmetische Mittel der vertikalen Abweichungen des Rauheitsprofils gegenüber der Mittellinie der Abtastung über eine Taststrecke L = 5 mm. Sie ergibt sich gemäß der Gleichung (2) zu

$$Ra = \frac{1}{L} \int_{0}^{L} |y(x)| \, dx = \frac{1}{5} \int_{0}^{L} |y(x)| \, dx \qquad (2)$$

in $\mu$m.

Bei dem Diagramm nach Figur 2 wird die Temperatur des Infrarotstrahlers 2 der Meßanordnung konstant auf 200 °C gehalten, und die Aluminiumplatte durchläuft eine mechanische Aufrauheinrichtung. Wie dem Diagramm zu entnehmen ist, sinkt mit steigender mittlerer Rauhtiefe die Temperatur der reflektierten Strahlung. Dieser Temperaturverlauf wird für Aluminiumplatten bestimmter Zusammensetzung als charakteristische Kenngröße bzw. Kalibrierkurve in der Vergleichseinrichtung 7 abgespeichert. Wird die Infrarottemperatur bzw. die Temperatur der reflektierten Infrarotstrahlung einer aufgerauhten Oberfläche einer Aluminiumplatte unbekannter Rauheit gemessen, so kann durch einen Vergleich mit dem abgespeicherten Temperaturverlauf die Rauheit der Plattenoberfläche bestimmt werden. Falls der Wert der Rauheit von einem gewünschten Sollwert abweicht, wird das Ausgangssignal der Vergleichseinrichtung 7, das ein Maß für die Abweichung nach oben oder unten darstellt, zur Steuerung der Aufrauheinrichtung, d.h. im vorliegenden Fall der Bürstenwalzen, genutzt. Es wird dann je nach Bedarf entweder die Umlaufgeschwindigkeit der Bürstenwalzen erhöht oder erniedrigt oder die Durchlaufgeschwindigkeit der Aluminiumplatten durch die Aufrauheinrichtung geändert.

Das Diagramm in Figur 3 zeigt einen ähnlichen Verlauf wie das Diagramm in Figur 2 und bezieht sich auf die Abhängigkeit der Temperatur der von einer mechanisch aufgerauhten Aluminiumplatte reflektierten Infrarotstrahlung von der Rauhtiefe Ra in $\mu$m. Dabei läuft die Platte über eine blanke Stahlwalze. Der Infrarotstrahler liefert eine konstante Temperatur von beispielsweise 373 K bis 393 K im Meßbereich auf der Materialoberfläche. Mit zunehmender Rauhtiefe Ra sinkt die gemessene Temperatur der reflektierten Strahlung. Dieser Temperaturverlauf bzw. diese Kalibrierkurve wird in der Weise aufgenommen, daß unterschiedlich stark aufgerauhte Platten bei ansonst gleichen Meßbedingungen mit schräg einfallender Infrarotstrahlung beaufschlagt werden und die Temperatur der reflektierten Infrarotstrahlung mittels des Infrarot-Thermometers 3 aufgenommen wird. Diese empirisch gemessene Kalibrierkurve bildet dann wieder eine Kenngrößenlinie, die es ermöglicht, aufgrund einer gemessenen Temperatur der reflektierten Strahlung die zunächst unbekannte Rauheit Ra einer zu vermessenen Aluminiumplatte zu bestimmen. Stellt sich dabei heraus, daß die Rauheit Ra von einem Sollwert abweicht, der über einen Eingang 12 in die Vergleichseinrichtung 7 eingespeist wird, so ergibt sich am Ausgang 8 der Vergleichseinrichtung 7 ein Differenzsignal als Steuersignal für die Aufrauheinrichtung. Je nach dem Vorzeichen dieses Steuersignals wird dann die Platte stärker oder weniger stark aufgerauht.

Die voranstehend angeführten Zusammenhänge gelten ebenso für Aluminiumbänder, die als Trägermaterial für lichtempfindliche Schichten bei der Herstellung von Druckplatten verwendet werden. Desweiteren ist das Meßverfahren auch auf aufgerauhte Metallplatten und -bänder aus Stahl, Zink und Metallegierungen anwendbar, die z.B. bei der Herstellung von Druckplatten Verwendung finden.

Mit der Erfindung wird der Vorteil erzielt, daß in einfacher Weise der Zusammenhang zwischen dem Reflexionsvermögen einer aufgerauhten Metalloberfläche für Wärmestrahlung und der Oberflächenrauheit mit geringem apparativem Aufwand genutzt werden kann. Sowohl der verwendete Infrarotstrahler als auch das Infrarot-Thermometer sind handelsübliche Geräte.

**Patentansprüche**

1. Verfahren zur berührungslosen on-line Messung der Oberflächenrauheit eines platten- oder bandförmigen Materials (5) aus Metall oder einer Metallegierung; dadurch gekennzeichnet, daß ein umrissener Meßbereich (4) der Materialoberfläche, der im Sichtfeld einer Meßeinrichtung (3) für von der Materialoberfläche reflektierte Strahlung (11) liegt, mit schräg einfallender Infrarotstrahlung (10) eines Infrarotstrahlers beaufschlagt wird, daß die Temperatur der von der Materialoberfläche reflektierten Infrarotstrahlung (11) mit der Meßeinrichtung (3) gemessen und mit einer Kalibrierkurve verglichen wird, die in der Weise aufgenommen wird, daß bei gleichbleibender Temperatur des Infrarotstrahlers (2) die Temperatur der von der Materialoberfläche reflektierten Infrarotstrahlung (11) für unterschiedliche bekannte Rauheitsgrade gemessen wird.

2. Verfahren nach Anspruch 1, dadurch gekennzeichnet, daß das Material (5) an der Meßstelle über den umrissenen Meßbereich (4) auf konstanter Temperatur gehalten wird.

3. Verfahren nach Anspruch 1, dadurch gekennzeichnet, daß aus dem Vergleich der gemessenen Temperatur der reflektierten Strahlung (11) anhand der Kalibrierkurve mit einem Sollwert der Temperatur ein Signal für die Steuerung einer Aufrauhstufe für die Materialoberfläche erhalten wird.

4. Verfahren nach Anspruch 1, dadurch gekennzeichnet, daß das Material (5) an der Meßstelle durch einen Infrarotstrahler (2) mit konstanter Temperatur, bevorzugt im Bereich von 373 bis 393 K, bestrahlt wird.

5. Verfahren nach Anspruch 1, dadurch gekennzeichnet, daß die Oberflächentemperatur des Infrarotstrahlers (2), der den Meßbereich (4) der Materialoberfläche mit schräg einfallender Infrarotstrahlung (10) beaufschlagt, während des Meßvorgangs konstantgehalten wird.

6. Verfahren nach Anspruch 1, dadurch gekennzeichnet, daß das Material (5) aus Aluminium besteht, dessen mechanisch aufgerauhte Oberfläche gemessen wird.

7. Meßanordnung zur berührungslosen on-line Messung der Oberflächenrauheit eines platten- oder bandförmigen Materials (5) aus Metall oder einer Metallegierung, dadurch gekennzeichnet, daß die Meßanordnung (1) aus einem Infrarotstrahler (2) und einem Infrarot-Thermometer (3) besteht, daß der Strahlengang (10) des Infrarotstrahlers schräg auf die Materialoberfläche innerhalb eines umrissenen Meßbereiches (4) gerichtet ist, daß der gesamte Meßbereich der Materialoberfläche, der im Sichtfeld des Infrarotthermometers (3) für die reflektierte Strahlung (11) liegt, im Verwendungsfall mit Infrarotstrahlung beaufschlagt ist, daß eine Vergleichseinrichtung (7) vorhanden ist, in der der Temperaturverlauf der von der Materialoberfläche reflektierten Strahlung in Abhängigkeit von der Oberflächenrauheit abgespeichert ist und daß die Temperatur der reflektierten Infrarotstrahlung (11) mit dem gespeicherten Temperaturverlauf verglichen wird, um die der gemessenen Temperatur entsprechende Oberflächenrauheit zu bestimmen.

8. Meßanordnung nach Anspruch 7, dadurch gekennzeichnet, daß das Material (5) bzw. der Meßbereich (4) während der Messung über eine beheizte Stahlwalze (6) geführt ist und daß die Meßanordnung (1) der Stahlwalze (6) gegenüberliegt.

9. Meßanordnung nach Anspruch 7, dadurch gekennzeichnet, daß ein Sollwert der Temperatur in die Vergleichseinrichtung (7) eingespeist und mit den jeweiligen gemessenen Temperaturwerten verglichen wird, um ein Differenzsignal als Steuersignal zu erhalten, das über einen Ausgang (8) der Vergleichseinrichtung einer Aufrauheinrichtung für das Material zugeleitet wird.

**Claims**

1. A method of contactless on-line measurement of the surface roughness of a material (5) in plate or strip form made of metal or a metal alloy, wherein an outlined measuring area (4) of the material surface, which lies in the field of coverage of a measuring device (3) for radiation (11) reflected from the material surface, is exposed to obliquely incident infrared radiation (10) of an infrared radiator, and wherein the temperature of the infrared radiation (11) reflected from the material surface is measured with the measuring device (3) and compared with a calibrating curve, which is recorded in such a way that, with constant temperature of the infrared radiator (2), the temperature of the infrared radiation (11) reflected from the material surface is measured for different known degrees of roughness.

2. The method as claimed in claim 1, wherein the material (5) at the measuring point is kept at a constant temperature over the outlined measuring area (4).

3. The method as claimed in claim 1, wherein from the comparison of the measured temperature of the reflected radiation (11) with a set value of the temperature, using the calibrating curve, a signal is obtained for controlling a roughening stage for the material surface.

4. The method as claimed in claim 1, wherein the material (5) at the measuring point is irradiated at constant temperature, preferably in the range from 373 to 393 K, by an infrared radiator (2).

5. The method as claimed in claim 1, wherein the surface temperature of the infrared radiator (2), which exposes the measuring area (4) of the material surface to obliquely incident infrared radiation (10), is kept constant during the measuring operation.

6. The method as claimed in claim 1, wherein the material (5) consists of aluminum, the mechanically roughened surface of which is measured.

7. A measuring arrangement for contactless on-line measurement of the surface roughness of a material (5) in plate or strip form made of metal or a metal alloy, wherein the measuring arrangement (1) comprises an infrared radiator (2) and an infrared thermometer (3), wherein the path of rays (10) of the infrared radiator is directed obliquely onto the material surface within an outlined measuring area (4), wherein the entire measuring area of the material surface which lies in the field of coverage of the infrared thermometer (3) for the reflected radiation (11) is exposed, in the case of use, to infrared radiation, wherein a comparison device (7) is present, in which the temperature variation of the radiation reflected from the material surface in dependence on the surface roughness is stored, and wherein the temperature of the reflected infrared radiation (11) is compared with the stored temperature variation, in order to determine the surface roughness corresponding to the measured temperature.

8. The measuring arrangement as claimed in claim 7, wherein, during the measurement, the material (5) or the measuring area (4) is passed over a heated steel roll (6), and wherein the measuring arrangement (1) lies opposite the steel roll (6).

9. The measuring arrangement as claimed in claim 7, wherein a set value of the temperature is fed into the comparison device (7) and compared with the respective measured temperature values, in order to obtain a differential signal as control signal which, via an output (8) of the comparison device, is sent to a roughening device for the material.

**Revendications**

1. Procédé de mesure en ligne sans contact de la rugosité superficielle d'un matière (5) en forme de plaque ou de bande, comprenant du métal ou de l'alliage métallique, caractérisé en ce qu'une zone de mesure délimitée (4) de la surface de la matière, qui se trouve dans le champ visuel d'un dispositif de mesure (3) pour un rayonnement (11) réfléchi par la surface de la matière, est bombardée par un rayonnement infrarouge (10), tombant sur la surface en oblique, d'un générateur de rayons infrarouges, en ce que la température du rayonnement infrarouge (11) réfléchi par la surface de la matière est mesurée par le dispositif de mesure (3) et comparée à une courbe d'étalonnage, qui est enregistrée de manière qu'à température constante du générateur de rayons infrarouges (2), la température du rayonnement infrarouge (11) réfléchi par la surface de la matière soit mesurée pour différents degrés de rugosité connus.

2. Procédé selon la revendication 1, caractérisé en ce que la matière (5) est maintenue à température constante au point de mesure sur la zone de mesure délimitée (4).

3. Procédé selon la revendication 1, caractérisé en ce que, par comparaison de la température mesurée du rayonnement réfléchi (11) sur la base de la courbe d'étalonnage avec une valeur théorique de la température, on obtient un signal pour la commande d'un stade de grenelage pour la surface de la matière.

4. Procédé selon la revendication 1, caractérisé en ce que la matière (5) est saumis aux rayons, au point de mesure, via un générateur de rayons infrarouges (2), à température constante, de préférence dans la plage de 373 à 393 ° K.

**5.** Procédé selon la revendication 1, caractérisé en ce que la température superficielle du générateur de rayons infrarouges (2), qui bombarde la zone de mesure (4) de la surface de la matière par un rayonnement infrarouge (10) tombant en oblique, est maintenue constante pendant l'opération de mesure.

**6.** Procédé selon la revendication 1, caractérisé en ce que la matière (5) comprend de l'aluminium dont la surface mécaniquement grenelée est mesurée.

**7.** Dispositif de mesure pour la mesure en ligne sans contact de la rugosité superficielle d'une matière (5) en plaque ou en bande comprenant du métal ou de l'alliage métallique, caractérisé en ce que le dispositif de mesure (1) comporte un générateur de rayons infrarouges (2) et un thermomètre infrarouge (3), en ce que le trajet des rayons du générateur de rayons infrarouges est dirigé en oblique sur la surface de la matière à l'intérieur d'une zone de mesure délimitée (4), en ce que toute la zone de mesure de la surface de la matière, qui se trouve dans le champ visuel du thermomètre infrarouge (3) pour le rayonnement réfléchi (11), est bombardée par le rayonnement infrarouge dans le cas d'application, en ce qu'il est prévu un dispositif de comparaison (7), dans lequel la courbe de la température du rayonnement réfléchi par la surface de la matière en fonction de la rugosité superficielle est mémorisée et en ce que la température du rayonnement infrarouge réfléchi (11) est comparée à la courbe de température mémorisée pour déterminer la rugosité superficielle correspondant à la température mesurée.

**8.** Dispositif de mesure selon la revendication 7, caractérisé en ce que la matière (5) ou la zone de mesure (4) est acheminée, au cours de la mesure, sur un rouleau d'acier chauffé (6) et le dispositif de mesure (1) est en regard du rouleau d'acier (6).

**9.** Dispositif de mesure selon la revendication 7, caractérisé en ce qu'une valeur théorique de la température est délivrée au dispositif de comparaison (7) et comparée aux valeurs de la température respectivement mesurées pour obtenir un signal de différence à titre de signal de commande qui sera acheminé, via une sortie (8) du dispositif de comparaison, à un dispositif de grenelage pour la matière.

Fig. 1

Abhängigkeit der Reflexionstemperatur von der mittleren Rauhtiefe

Fig. 2

Reflexionstemperatur in Abhängigkeit von der Rauhtiefe Ra

Fig. 3